# EUROPÄISCHE PATENTSCHRIFT

(11) **EP 1 922 915 B1**
(45) Veröffentlichungstag und Bekanntmachung des Hinweises auf die Patenterteilung: **17.02.2010**
(21) Anmeldenummer: 07119969.9
(22) Anmeldetag: 05.11.2007
(51) Int. Cl.: A01D 43/08

(54) **Maschine zum Mähen von stängelartigem Erntegut**
Machine for mowing stalk-like crops
Machine destinée à tondre des récoltes de plantes à tiges

(30) Priorität: 15.11.2006 DE 102006053772
(43) Veröffentlichungstag der Anmeldung: 21.05.2008
(73) Patentinhaber: Maschinenfabrik Kemper GmbH & Co. KG, 48703 Stadtlohn (DE)
(72) Erfinder: Rickert, Clemens, 49683, Ahaus (DE); Grobmeier, Jens, 48703, Stadtlohn (DE); Hüning, Martin, 48727, Billerbeck (DE); Schulze Hockenbeck, Leo, 48351, Everswinkel (DE); Weitenberg, Klemens, 46325, Borken (DE)
(74) Vertreter: Holst, Sönke

(56) Entgegenhaltungen:
- EP-A- 1 862 058
- DE-C1- 10 103 595
- DE-C1- 10 105 439
- DE-U1- 29 614 549

## Beschreibung

Die Erfindung betrifft eine Maschine zum Mähen von stängelartigem Erntegut, mit:
einem in einer Vorwärtsrichtung über ein Feld bewegbaren Rahmen,
wenigstens einer am Rahmen abgestützten Mäh- und Einzugseinrichtung, die untere Schneidmittel zum Abschneiden von Pflanzen und darüber angeordnete, in zumindest zwei übereinander liegende Reihen angeordnete, bewegliche Fördermittel zum Abtransport von Pflanzen aufweist,
einer mit dem Rahmen verbundenen Seitenwand, die bezüglich der Vorwärtsrichtung seitlich neben der Mäh- und Einzugseinrichtung angeordnet ist, nach vorn in eine äußere Teilerspitze
übergeht und eine seitliche Begrenzung der Maschine bildet,
wobei die bezüglich der Vorwärtsrichtung vorderen Teile der der Seiten wand benachbarten Fördermittel der Mäh- und Einzugseinrichtung sich im Erntebetrieb von der benachbarten Seitenwand fort bewegen und die Seitenwand die unteren Schneidmittel zur Seite hin abdeckt.

Maschinen eingangs genannter Art werden in der Landwirtschaft verwendet, um stängelartiges Erntegut, beispielsweise Maispflanzen, vorn Boden eines Felds abzuschneiden und einem die Maschine tragenden Feldhäcksler zuzuführen, in dem die Pflanzen gehäckselt und auf einen Ladebehälter auf einem Anhänger ausgetragen werden. Derartige Maschinen weisen in der Regel eine Anzahl seitlich nebeneinander angeordneter, reihenunabhängig arbeitender Mäh- und Einzugseinrichtungen in Form von um die Hochachse rotierenden Trommeln mit um ihren Rand verteilten Ausbuchtungen, in denen die Pflanzenstängel Aufnahme finden, und unterhalb der Trommeln angebrachter Mähscheiben auf, die zum Abschneiden der Pflanzenstängel vorn Erdboden dienen. Es sind auch Ausführungsformen mit beweglichen Förderketten bekannt.

Eine Maschine eingangs genannter Art wird in der DE 103 60 299 A beschrieben. Sie umfasst einen Rahmen, an dem insgesamt vier Mäh- und Einzugseinrichtungen befestigt sind. Die äußeren Mäh- und Einzugseinrichtungen rotieren mit ihren Vorderseiten jeweils nach innen, während die beiden inneren Mäh- und Einzugseinrichtungen mit ihren Vorderseiten jeweils nach außen rotieren. An den Rückseiten der inneren Mäh- und Einzugseinrichtungen wird das Erntegut dem Einzugskanal eines selbstfahrenden Feldhäckslers übergeben. An seinen Außenseiten umfasst der Rahmen Seitenwände, die eine seitliche Begrenzung der Maschine bilden, die jeweils die ihnen benachbarten, äußeren Mäh- und Einzugseinrichtungen zur Seite hin abdecken. An den Oberseiten der von einem rückwärtigen Ende schräg nach vorn und unten abfallenden und schließlich in äußere Teilerspitzen übergehenden Seitenwände sind antreibbare Stängelheberschnecken angebracht.

In der DE 101 03 595 C1 wird ein reihenunabhängiges Schneidwerk für Mais mit mehreren nebeneinander angeordneten Schneid- und Fördervorrichtungen beschrieben, die sich jeweils aus einer unteren Schneidscheibe und darüber angeordneten Förderscheiben zusammensetzen, die um die Hochachse in Drehung versetzt werden. Die außen am Schneidwerk angeordneten Schneid- und Fördervorrichtungen rotieren mit ihren Vorderseiten nach außen. An den Außenseiten der Maschine sind Stängelteiler eingezeichnet, die sich bis zur Drehachse der Schneid- und Fördervorrichtungen nach hinten erstrecken und dort enden. In vertikaler Richtung erstrecken sich die Stängelteiler bis unterhalb der oberen zwei Förderscheiben. Rückwärtig der besagten Schneid- und Mähvorrichtung befindet sich eine horizontale Abdeckplatte.

Die DE 101 05 439 C1 zeigt ein ähnliches Schneidwerk, bei dem sich die ebenfalls mit ihren Vorderseiten nach außen drehenden Förderscheiben der äußeren Schneid- und Fördervorrichtungen oberhalb der äußeren Stängelteiler eingezeichnet sind.

In der DE 296 14 549 U1 wird eine Maschine zum Mähen von Mais mit einer Anzahl seitlich nebeneinander angeordneter, rotierender Fördertrommeln und darunter angeordneten Schneidscheiben beschrieben. An den Seiten der Maschine sind nach vorn ragende seitliche Führungen angebracht, an deren Spitze sich Stängelteiler befinden. Oberhalb der Führungen sind Schneidscheiben der benachbarten Fördertrommeln eingezeichnet, deren Vorderseiten sich nach innen drehen.

Die nachveröffentlichte EP 1 862 058 A1 zeigt eine weitere Maschine zur Ernte stängelartiger Pflanzen mit einer Anzahl seitlich nebeneinander angeordneter, rotierender Fördertrommeln und darunter angeordneten Schneidscheiben. Die dem äußeren Rand der Maschine benachbarten Fördertrommeln rotieren mit ihren Vorderseiten nach innen und ihnen sind äußere Stängelteiler benachbart. Unterhalb der Fördertrommeln ist eine auch die Außenkante der Maschine definierende Platte eingezeichnet.

Die Stängelheberschnecken werden insbesondere bei der Ernte von Lagermais benötigt und dienen dazu, liegende Pflanzen derart anzuheben, dass sie von den Fördermitteln der benachbarten Mäh- und Einzugseinrichtung erfasst und mitgeführt werden können. Ein Nachteil der Stängelheberschnecken liegt in dem Aufwand, der zu ihrer Herstellung und für ihren Antrieb zu treiben ist. Außerdem beeinträchtigen sie die Sicht des Fahrers der die Maschine tragenden Erntemaschine zur Seite. Lässt man die Stängelheberschnecken hingegen fortfallen, ergeben sich in ungünstigen Erntesituationen, insbesondere bei der Aufnahme von Lagermais, Gutstaus in der Nähe der Seitenwand.

Die der Erfindung zu Grunde liegende Aufgabe wird darin gesehen, eine Maschine zum Mähen von stängelartigem Erntegut zu schaffen, bei der auch ohne Stängelheberschnecken eine problemlose Aufnahme von Pflanzen möglich ist, insbesondere von Lagermais.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Maschine zum Mähen von stängelartigem Erntegut, insbesondere Mais, umfasst einen Rahmen mit einer oder mehreren daran abgestützten Mäh- und Einzugseinrichtungen, die jeweils untere Schneidmittel zum Abschneiden von Pflanzen von im Boden verbleibenden Stoppeln oder Stümpfen und darüber angeordnete, angetrieben bewegliche Fördermittel mit um ihren Umfang verteilten Aussparungen zur Aufnahme und zum Abtransport der Pflanzen aufweisen, die in vertikaler Richtung zumindest in einer Reihe angeordnet sind. Eine am Rahmen befestigte Seitenwand bildet eine seitliche Begrenzung der Maschine. Der Seitenwand ist eine Mäh- und Einzugseinrichtung benachbart, deren Fördermittel sich im Erntebetrieb von der Seitenwand fort bewegende Vorderseiten aufweisen. Die Seitenwand deckt die Schneidmittel der ihr benachbarten Mäh- und Einzugseinrichtung zur Seite hin ab und geht nach vorn in eine Teilerspitze über. Es wird vorgeschlagen, die Höhe der Seitenwand derart zu gestalten, dass sie in einem Bereich, der sich zwischen der Teilerspitze und einem rückwärtigen Ende erstreckt, unterhalb einer Reihe der Fördermittel endet. Das rückwärtige Ende des Bereichs befindet sich in der Nähe der Symmetrieachse der benachbarten Fördermittel oder rückwärtig von dieser Symmetrieachse. Diese Symmetrieachse ist bei um die Hochachse rotierenden Fördermitteln die Drehachse und bei als Kettenförderer ausgeführten Fördermitteln die Drehachse des Umlenkrads der Kettenförderer. Die der Seitenwand benachbarte Mäh- und Einzugseinrichtung umfasst wenigstens zwei übereinander liegende Reihen von Fördermitteln. Die Seitenwand deckt eine oder mehrere der unteren Reihen zur Seite hin ab, während sie die obere Reihe im besagten Bereich nicht zur Seite hin abdeckt.

Auf diese Weise erreicht man, dass zumindest eine Reihe der Fördermittel in dem besagten Bereich nicht durch die Seitenwand nach außen hin abgedeckt wird. Diese Reihe der Fördermittel liegt demnach auch zur Seite hin frei und kann liegende Pflanzen, insbesondere Lagermais, erfassen und an der Vorderseite der Mäh- und Einzugseinrichtung nach innen fördern, so dass auch ohne Stängelheberschnecke eine problemlose Aufnahme und Abförderung von liegenden Pflanzen möglich wird. Man kann demnach auf die Stängelheberschnecke verzichten, was die Maschine vereinfacht, sie preiswerter herstellbar macht und eine verbesserte Sicht zur Seite ermöglicht.

Die obere, nicht abgedeckte Reihe hat vorzugsweise einen größeren Hüllkreis als die untere, abgedeckte Reihe. Die Seitenwand kann dann eine obere, sich horizontal erstreckende Wand aufweisen, welche sich weiter zur Symmetrieachse der Fördermittel erstreckt als der Hüllkreis der oberen Reihe der Fördermittel. Mit anderen Worten bildet die obere, horizontale Wand der Seitenwand unterhalb der oberen Reihe der Fördermittel eine Fläche, auf der sich Pflanzenteile abstützen können, die durch die obere Reihe der Fördermittel gefördert werden.

Es hat sich als vorteilhaft erwiesen, die erwähnte obere, horizontale Wand der Seitenwand zwischen der Symmetrieachse der benachbarten Fördermittel und der Teilerspitze nach unten hin einzuwölben. Die in von den Fördermitteln erfassten Pflanzen können demnach in die Einbuchtung hineinrutschen und von dort wiederum an der Innenseite der Seitenwand nach unten und innen abrutschen, so dass sie dort von einer (insbesondere unteren) Reihe der Fördermittel erfasst und abgefördert werden können.

Der Abtransport der Pflanzen kann durch einen Vordrückbügel verbessert werden, der sich oberhalb der Mäh- und Einzugseinrichtung von der Symmetrieachse der der Seitenwand benachbarten Fördermittel (oder einem davor liegenden Punkt) nach außen bis zu einem oberhalb der Seitenwand liegenden Punkt und von dort nach vorn erstreckt. Dieser Vordruckbügel leitet die Pflanzen zur Mitte der Maschine, wo sie unproblematisch abgefördert werden können.

Die Abförderung der Pflanzen kann auch durch eine gewölbte Abdeckung oberhalb der Fördermittel verbessert werden, an deren Oberseite sich ein mittiger Zylinder befindet, der mit der Abdeckung und den Fördermitteln starr verbunden ist und gemeinsam mit ihnen rotiert. Der Zylinder kann eine glatte Oberfläche haben oder mit Mitnehmern ausgestattet sein.

In den Zeichnungen ist ein nachfolgend näher beschriebenes Ausführungsbeispiel der Erfindung dargestellt. Es zeigt:
- Fig.: 1 eine perspektivische Frontansicht einer Maschine zum Mähen von stängelartigem Erntegut,

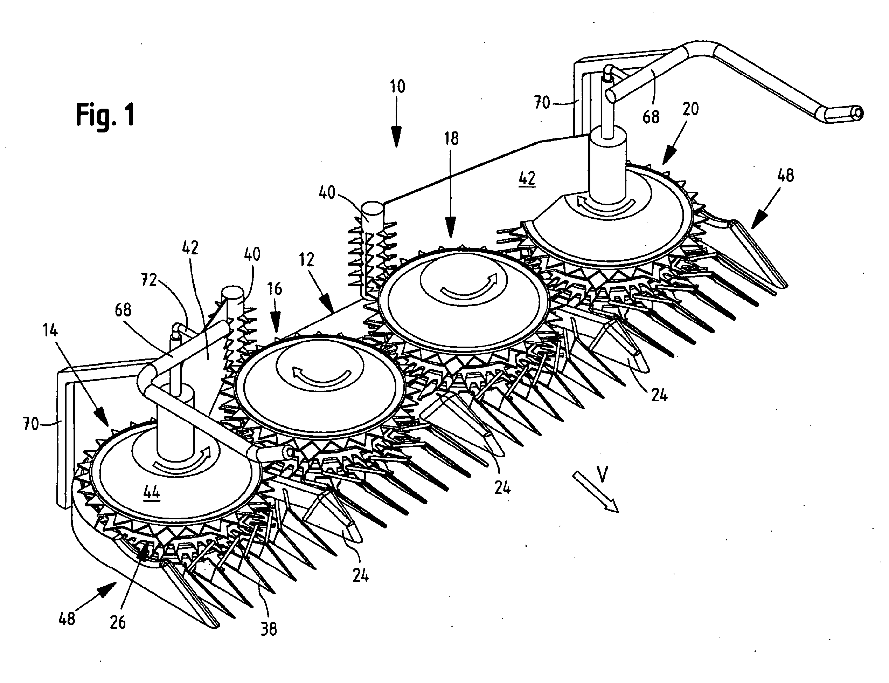

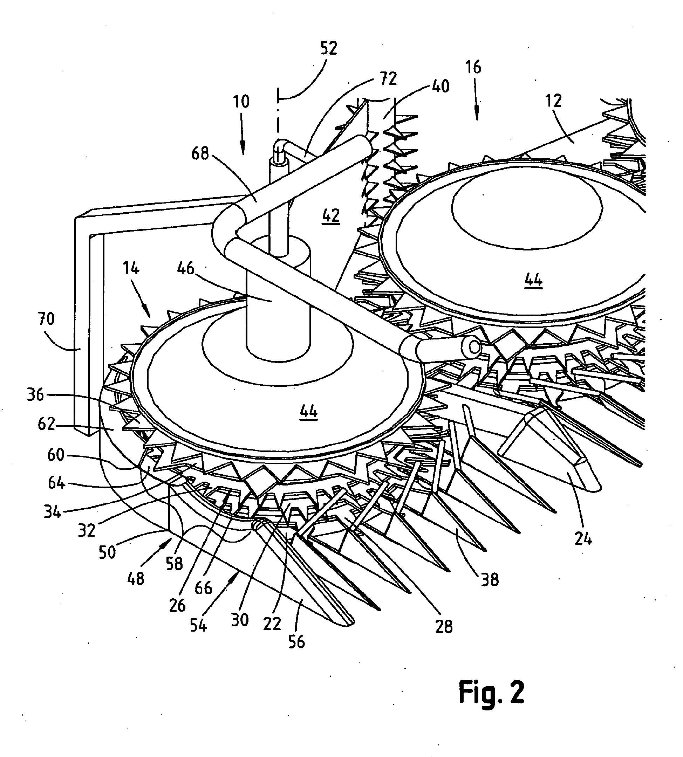

- Fig. 2: einen vergrößerten Ausschnitt aus der Figur 1, in dem die in Vorwärtsrichtung rechte Mäh- und Einzugseinrichtung und die ihr benachbarte Seitenwand dargestellt ist.

In der Figur 1 ist eine Maschine 10 zum Mähen von stängelartigem Erntegut, insbesondere Mais, in einer Frontperspektive dargestellt. Die Maschine 10 kann an einem selbstfahrenden Feldhäcksler (nicht gezeigt) befestigt und von ihm in einer Fahrtrichtung V über ein abzuerntendes Feld bewegt werden. Im Folgenden beziehen sich Richtungsangaben, wie vorn und hinten, auf die Vorwärtsrichtung V.

Die Maschine 10 weist einen Rahmen 12 auf, an dem seitlich nebeneinander vier Mäh- und Einzugseinrichtungen 14, 16, 18, 20 befestigt sind. Die Mäh- und Einzugseinrichtungen 14 bis 20 setzen sich jeweils aus einem unteren, in Drehung versetzbaren, als Schneidscheibe ausgeführten Schneidmittel 22 (s. Figur 2) und koaxial darüber angeordneten, in Drehung versetzbaren Fördermitteln 26 zusammen, die sich aus fünf Reihen 28 bis 36 zusammensetzen und als Förderscheiben mit um ihren Umfang verteilten Mitnehmern zum Transport der Pflanzen ausgeführt sind. Die Schneidmittel 22 sind am Rand mit scharfen Zähnen ausgestattet oder anderweitig geschärft, um die Pflanzenstängel von dem im Boden verbleibenden Stumpf abzutrennen. Die Stängel finden in Ausbuchtungen zwischen den Mitnehmern der Fördermittel 26 Aufnahme und werden wie unten beschrieben zum Feldhäcksler transportiert. Die Arbeitsbreite der Mäh- und Einzugseinrichtungen 16 bis 22 entspricht jeweils zwei Reihen, d. h. etwa 1,5 m. Die Maschine 10 kann somit acht Reihen im Abstand von 75 cm angebauten Mais gleichzeitig ernten.

Zwischen den Mäh- und Einzugseinrichtungen 14 bis 20 befinden sich jeweils Stängelteiler 24, um die Pflanzen seitlich abzulenken und in den Eingriffsbereich der Mäh- und Einzugseinrichtungen 14 bis 20 zu verbringen, wenn erforderlich. An den Vorderseiten der Mäh- und Einzugseinrichtungen 16 bis 22 sind kleinere Stängelteiler 38 angeordnet.

Beim Erntebetrieb drehen sich die Mäh- und Einzugseinrichtungen 14 bis 20 in den durch die Pfeile angedeuteten Richtungen. Die der Längsmittelebene der Maschine 10 benachbarten, inneren Mäh- und Einzugseinrichtungen 16, 18 fördern die Pflanzen somit zunächst nach außen und nach hinten, während die äußeren Mäh- und Einzugseinrichtungen 14, 20 sich zu den ihnen jeweils benachbarten Mäh- und Einzugsrichtungen 16, 18 gegensinnig drehen. Die äußeren Mäh- und Einzugseinrichtungen 14, 20 übergeben ihr Erntegut etwa in der Mitte zwischen den Drehachsen der Mäh- und Einzugseinrichtungen 14, 16 bzw. 20, 18 an die inneren Mäh- und Einzugseinrichtungen 16, 18. An der Rückseite der inneren Mäh- und Einzugseinrichtungen 16, 18 wird das Erntegut an Abgabefördertrommeln 40 übergeben, die um vertikale oder leicht nach vorn geneigte Achsen rotieren, um ggf. den Höhenunterschied zwischen dem Boden der Maschine 10 und den nachfolgenden Einzugswalzen des Einzugskanals des Feldhäckslers zu überwinden. An der Rückseite der inneren Mäh- und Einzugseinrichtungen 16, 18 wird das Erntegut somit in Querförderkanälen gefördert, die nach hinten durch je eine mit dem Rahmen 10 fest und starr verbundene Rückwand 42 der Maschine 10 begrenzt werden. Die äußeren Bereiche der Rückwand 42 erstrecken sich bis in die Nähe der Drehachsen der äußeren Mäh- und Einzugseinrichtungen 14, 20.

An den Oberseiten der Mäh- und Einzugseinrichtungen 14 bis 20 sind jeweils Abdeckungen 44 mit der Form eines Kegelstumpfs angeordnet. Die Abdeckungen 44 verengen sich somit in ihrem Außenbereich konisch nach oben und haben einen flachen Innenbereich. Auf den flachen Innenbereich der Abdeckungen nur der äußeren Mäh- und Einzugseinrichtungen 14, 20 ist jeweils ein mittiger Zylinder 46 aufgesetzt. Die Zylinder 46 drehen sich gemeinsam mit den Abdeckungen 44 und den Fördermitteln 26, da sie alle starr untereinander verbunden sind.

Oberhalb der äußeren Mäh- und Einzugseinrichtungen 14, 20 sind Vordruckbügel 68 vorhanden, die sich jeweils von einem geringfügig vor der Dreh- und Symmetrieachse 52 der Fördermittel 26 liegenden Punkt näherungsweise geradlinig nach außen bis zur Seitenwand 48 und von dort nach vorn erstrecken. Die Vordruckbügel 68 sind durch rückwärtige Stützen 70 am Rahmen 12 befestigt und stützen sich durch Streben 72 an den Zylindern 46 ab.

In der Figur 2 ist der in Vorwärtsrichtung V rechte Seitenbereich der Maschine 10 vergrößert dargestellt. Eine mit dem Rahmen 12 verbundene Seitenwand 48 erstreckt sich von einem rückwärtigen Bereich hinter der rechten Mäh- und Einzugseinrichtung 14 an deren Umfang anschließend bogenförmig um diese herum nach vorn und geht etwa an einer Position 50, die bezüglich der Vorwärtsrichtung der Dreh- und Symmetrieachse 52 der rechten Mäh- und Einzugseinrichtung 14 entspricht, in einen geradlinig nach vorn verlaufenden Abschnitt 54 über, welcher in eine äußere Teilerspitze 56 ausläuft.

Die Seitenwand 48 endet in einem Bereich 58, der sich vorn hinteren Ende der Teilerspitze 56 nach hinten bis zu einem rückwärtigen Ende 60 erstreckt, in vertikaler Richtung unterhalb der (von unten gezählt) vierten Reihe 34 der Fördermittel 26 der Mäh- und Einzugseinrichtung 14. Das rückwärtige Ende 60 liegt geringfügig rückwärtig der Dreh- und Symmetrieachse 52 der rechten Mäh- und Einzugseinrichtung 14. Rückwärtig des Endes 60 ist ein schräg nach innen weisender Kragen 62 an der Seitenwand 48 angebracht, der der Bogenform der Seitenwand 48 um den rückwärtigen Bereich der Mäh- und Einzugseinrichtung 14 folgt und die vierte Reihe 34 der Fördermittel 26 zur Seite und nach hinten abdeckt, nicht aber die fünfte, oberste Reihe 36 der Fördermittel 26. Die Seitenwand 48 deckt demnach die Schneidmittel 22 und die unteren drei Reihen 28, 30, 32 der Fördermittel 26 zur Seite und nach hinten hin ab. Die vierte (zweit-oberste) Reihe 34 der Fördermittel 26 wird durch die Seitenwand 48 im Bereich 58 nicht zur Seite abgedeckt und die fünfte (oberste) Reihe 36 der Fördermittel wird durch die Seitenwand 48 überhaupt nicht zur Seite (und auch nicht nach hinten hin) abgedeckt. Die äußeren Hüllkreise der oberen zwei Reihen 34, 36 der Fördermittel 26 sind größer als die Hüllkreise der unteren drei Reihen 28, 30, 32 der Fördermittel 26. Die oberen Reihen 34, 36 ragen nach rechts bis zur Außenseite der Seitenwand 48, so dass eine obere Wand 64 der Seitenwand 48 sich vertikal unterhalb der oberen Reihen 34, 36 befindet.

Zwischen der Position 50 und dem rückwärtigen Ende der Teilerspitze 56 ist die obere, horizontale Wand 64 der Seitenwand 48 mit einer nach unten gerichteten, bogenförmigen Einwölbung 66 versehen. In der Einwölbung 66 ist die obere Wand 64 der Seitenwand 48 auch nach links und rechts gewölbt, mit dem höchsten Punkt jeweils in der Mitte.

Die Maschine 10 umfasst keine Stängelheberschnecken, was zum einen Kosten und Gewicht einspart, zum anderen eine verbesserte Sicht auf den Bereich seitlich neben der Maschine 10 bietet. Sich eventuell im Bereich der Seitenwände 48 ansammelnde Pflanzen, insbesondere Lagermais, werden durch die oberen Reihen 34, 36 der Fördermittel 26, die im Bereich 58 zur Seite hin nicht durch die Seitenwand 48 abgedeckt werden, erfasst und im Zusammenwirken mit den rotierenden Abdeckungen 48 und Zylindern 46 zur Mitte der Maschine 10 hin abgefördert. Die Einwölbung 66 verhindert, dass Pflanzen an der Seitenwand 48 nach außen fallen. Der Vordruckbügel 68 ist derart geformt, dass die Pflanzen sicher durch die äußeren Mäh- und Einzugseinrichtungen 14, 20 erfasst werden können.

## Patentansprüche

1. Maschine (10) zum Mähen von stängelartigem Erntegut, mit:
einem in einer Vorwärtsrichtung (V) über ein Feld bewegbaren Rahmen (12),
wenigstens einer am Rahmen abgestützten Mäh- und Einzugseinrichtung (14, 16, 18, 20), die untere Schneidmittel (22) zum Abschneiden von Pflanzen und darüber angeordnete, in zumindest zwei übereinander liegenden Reihen (28, 30, 32, 34, 36) angeordnete, bewegliche Fördermittel (26) zum Abtransport von Pflanzen aufweist,
einer mit dem Rahmen (12) verbundenen Seitenwand (48), die bezüglich der Vorwärtsrichtung (V) seitlich neben der Mäh- und Einzugseinrichtung (14, 20) angeordnet ist, nach vorn in eine äußere Teilerspitze (56) übergeht und eine seitliche Begrenzung der Maschine (10) bildet,
wobei die bezüglich der Vorwärtsrichtung (V) vorderen Teile der Fördermittel (26) der der Seitenwand (48) benachbarten Mäh- und Einzugseinrichtung (14, 20) sich im Erntebetrieb von der benachbarten Seitenwand (48) fort bewegen und
die Seitenwand (48) die unteren Schneidmittel (22) zur Seite hin abdeckt,
**dadurch gekennzeichnet, dass** die Seitenwand (48) zumindest innerhalb eines Bereichs (58), der sich zwischen der Teilerspitze (56) und einem der Symmetrieachse (52) der benachbarten Fördermittel (26) benachbarten, rückwärtigen Ende (60) erstreckt, unterhalb einer Reihe (34, 36) der Fördermittel (26) endet und wenigstens eine untere Reihe (28, 30, 32) der Fördermittel (26) zur Seite hin abdeckt und eine obere Reihe (34, 36) der Fördermittel (26) nicht zur Seite hin abdeckt.

2. Maschine (10) nach Anspruch 1, **dadurch gekennzeichnet, dass** eine obere Reihe (34, 36) der Fördermittel (26) einen größeren Hüllkreis aufweist als eine untere Reihe (28, 30, 32) der Fördermittel (26).

3. Maschine (10) nach Anspruch 2, **dadurch gekennzeichnet, dass** die Seitenwand (48) innerhalb des besagten Bereichs (58) eine obere, horizontale Wand (64) aufweist, die sich in radialer Richtung der Fördermittel (26) weiter zur Symmetrieachse (52) der Fördermittel (26) erstreckt als der Hüllkreis der oberen Reihe (34, 36) der Fördermittel (26).

4. Maschine (10) nach Anspruch 3, **dadurch gekennzeichnet, dass** die obere Wand (64) zwischen der Symmetrieachse (52) der benachbarten Fördermittel (26) und der Teilerspitze (56) mit einer Einwölbung (66) ausgestattet ist.

5. Maschine (10) nach einem der Ansprüche 1 bis 4, **dadurch gekennzeichnet, dass** sich ein oberhalb der der Seitenwand (48) benachbarten Mäh- und Einzugseinrichtung (14, 20) angeordneter Vordruckbügel (68) etwa von der Symmetrieachse (52) der Fördermittel (26) nach außen bis zur Seitenwand (48) und von dort nach vorn erstreckt.

6. Maschine (10) nach einem der Ansprüche 1 bis 5, **dadurch gekennzeichnet, dass** oberhalb der der Seitenwand (48) benachbarten Mäh- und Einzugseinrichtung (14, 20) eine gewölbte Abdeckung (44) angebracht ist, an deren Oberseite sich ein mittiger Zylinder (46) befindet.

7. Kombination aus einer selbstfahrenden Erntemaschine, insbesondere Feldhäcksler, und einer Maschine (10) nach einem der vorhergehenden Ansprüche.

## Claims

1. A machine (10) for mowing stalk-like crops, with:
a frame (12) which is movable in a forwards direction (V) over a field,
at least one mowing and gathering device (14, 16, 18, 20) which is supported on the frame and has lower cutting means (22) for cutting plants and movable conveying means (26) which are arranged thereabove and lying in at least two rows (28, 30, 32, 34, 36) one above the other and are intended for transporting away plants,
a side wall (48) which is connected to the frame (12), is arranged laterally with respect to the forwards direction (V) next to the mowing and gathering device (14, 20) adjacent thereto, merges to the front into an outer divider tip (56) and forms a lateral boundary of the machine (10),
wherein the front parts, with respect to the forwards direction (V), of the conveying means (26) of the mowing and gathering device (14, 20) which is adjacent to the sidewall (48) move away from the adjacent sidewall (48) in the harvesting operation, and
the sidewall (48) covers the lower cutting means (22) towards the side,
**characterized in that** the sidewall (48), at least within a region (58) which extends between the divider tip (56) and a rear end (60) adjacent to the axis of symmetry (52) of the adjacent conveying means (26), ends below a row (34, 36) of the conveying means (26) and covers at least one lower row (28, 30, 32) of the conveying means (26) towards the side and does not cover an upper row (34, 36) of the conveying means (26) towards the side.

2. A machine (10) according to claim 1,
**characterized in that** the upper row (34, 36) of the conveying means (26) has a larger envelope circle than the lower row (28, 30, 32) of the conveying means (26).

3. A machine (10) according to Claim 2,
**characterized in that**, within said region (58), the sidewall (48) has an upper, horizontal wall (64) which, in the radial direction of the conveying means (26), extends further with respect to the axis of symmetry (52) of the conveying means (26) than the envelope circle of the upper row (34, 36) of the conveying means (26) .

4. A machine (10) according to Claim 3,
**characterized in that** the upper wall (64) is provided with an arched portion (66) between the axis of symmetry (52) of the adjacent conveying means (26) and the divider tip (56).

5. A machine (10) according to one of Claims 1 to 4, **characterized in that** a precompression bar (68) which is arranged above the mowing and gathering device (14, 20) which is adjacent to the sidewall (48) extends outwards approximately from the axis of symmetry (52) of the conveying means (26) as far as the sidewall (48) from where it extends forwards.

6. A machine (10) according to one of Claims 1 to 5, **characterized in that** a domed cover (44), on the top side of which a central cylinder (46) is located, is provided above the mowing and gathering device (14, 20) which is adjacent to the sidewall (48).

7. A combination of a self-propelling harvester, in particular field chopper, and a machine (10) according to one of the preceding claims.

## Revendications

1. Machine (10) destinée à tondre des récoltes de plantes à tiges, comprenant:
un châssis (12) déplaçable dans une direction d'avance (V) dans un champ,
au moins un dispositif de tonte et d'amenée (14, 16, 18, 20) supporté sur le châssis, qui présente des moyens de coupe inférieurs (22) pour couper des plantes et des moyens de transport mobiles (26) disposés par-dessus en au moins deux rangées (28, 30, 32, 34, 36) superposées pour l'évacuation des plantes,
une paroi latérale (48) connectée au châssis (12), qui est disposée, par rapport à la direction d'avance (V), latéralement à côté du dispositif de tonte et d'amenée (14, 20) qui lui est adjacent, qui se prolonge vers l'avant en une pointe de séparateur extérieure (56) et qui forme une limite latérale de la machine (10),
les parties avant, par rapport à la direction d'avance (V), des moyens de transport (26) du dispositif de tonte et d'amenée (14, 20) adjacent à la paroi latérale (48) se déplaçant pendant l'opération de moisson vers l'avant depuis la paroi latérale adjacente (48) et
la paroi latérale (48) recouvrant les moyens de coupe inférieurs (22) vers le côté,
**caractérisée en ce que** la paroi latérale (48), au moins à l'intérieur d'une région (58) qui s'étend entre la pointe de séparateur (56) et une extrémité arrière (60) adjacente à l'axe de symétrie (52) des moyens de transport adjacents (26), se termine en dessous d'une rangée (34, 36) des moyens de transport (26) et recouvre au moins une rangée inférieure (28, 30, 32) des moyens de transport (26) vers le côté et recouvre une rangée supérieure (34, 36) des moyens de transport (26) non vers le côté.

2. Machine (10) selon la revendication 1, **caractérisée en ce que** la rangée supérieure (34, 36) des moyens de transport (26) présente un plus grand cercle d'enveloppement que la rangée inférieure (28, 30, 32) des moyens de transport (26) .

3. Machine (10) selon la revendication 2, **caractérisée en ce que** la paroi latérale (48) à l'intérieur de ladite région (58) présente une paroi supérieure horizontale (64) qui s'étend dans la direction radiale des moyens de transport (26) davantage vers l'axe de symétrie (52) des moyens de transport (26) que le cercle d'enveloppement de la rangée supérieure (34, 36) des moyens de transport (26) .

4. Machine (10) selon la revendication 3, **caractérisée en ce que** la paroi supérieure (64) entre l'axe de symétrie (52) des moyens de transport adjacents (26) et la pointe de séparateur (56) est pourvue d'un renfoncement courbe (66).

5. Machine (10) selon l'une quelconque des revendications 1 à 4, **caractérisée en ce qu'**un arceau de pré-pression (68) disposé au-dessus du dispositif de tonte et d'amenée (14, 20) adjacent à la paroi latérale (48) s'étend approximativement depuis l'axe de symétrie (52) des moyens de transport (26) vers l'extérieur jusqu'à la paroi latérale (48) et de là vers l'avant.

6. Machine (10) selon l'une quelconque des revendications 1 à 5, **caractérisée en ce qu'**au-dessus du dispositif de tonte et d'amenée (14, 20) adjacent à la paroi latérale (48) est monté un recouvrement courbe (44) sur le côté supérieur duquel se trouve un cylindre central (46).

7. Combinaison d'une moissonneuse automotrice, en particulier d'une faucheuse-hacheuse, et d'une machine (10) selon l'une quelconque des revendications précédentes.
